# FASCICULE DE BREVET EUROPEEN

(11) **EP 1 693 317 B1**
(45) Date de publication et mention de la délivrance du brevet: **01.07.2009**
(21) Numéro de dépôt: 06290266.3
(22) Date de dépôt: 16.02.2006
(51) Int. Cl.: B65G 1/04, B66F 9/14

(54) **Distributeur automatique de produits**
Automatische Ausgabevorrichtung für Produkte
Automatic dispensing machine for products

(30) Priorité: 16.02.2005 FR 0501558
(43) Date de publication de la demande: 23.08.2006
(73) Titulaire: Azoulay, Joël, 78380 Bougival (FR)
(72) Inventeur: Azoulay, Joël, 78380 Bougival (FR); Azoulay, Laurent, 75017 Paris (FR)
(74) Mandataire: Laget, Jean-Loup

(56) Documents cités:
- DE-U1-0202004 004 62
- US-A- 5 927 926

## Description

La présente invention a pour objet un système d'extraction et de rangement et un distributeur automatique de produits utilisant un tel système d'extraction et de rangement.

Des distributeurs automatiques de produits sont notamment utilisés dans le domaine pharmaceutique, en particulier dans les pharmacies, dans lesquelles de nombreuses boîtes de médicaments sont stockées et doivent être accessibles rapidement en vue de répondre à la demande des clients. La présente invention est donc particulièrement adaptée, bien qu'elle ne s'y limite pas, à la distribution de produits pharmaceutiques.

On connaît d'après l'état de la technique et notamment par le brevet US 5,927,926, un distributeur automatique comportant deux armoires situées de part et d'autre d'une zone d'extraction. Cette dernière étant divisée en plusieurs paliers correspondant au nombre d'étagères dans chaque armoire. A chaque palier, se trouve un système d'extraction et de rangement, mobile sur un axe longitudinal, constitué d'un chariot comprenant une base pour soutenir un objet, deux guides pouvant s'écarter l'un par rapport à l'autre et deux spatules télescopiques comportant à chacune de leurs extrémités un volet amovible rétractable. Selon la position ouverte ou rentrée des spatules, l'extraction ou le rangement de l'objet dans l'une des armoires a lieu. Un tel système ne permet de ranger et d'extraire qu'un seul objet à la fois, ce qui ralentit le rangement et l'extraction de boîtes, d'autant plus que les ordonnances prescrivent généralement plusieurs boîtes d'un même médicament. D'autre part, les volets rétractables ont l'inconvénient d'être assez fragiles, ils sont continuellement mis en action lors de chaque étape d'extraction et de rangement, ce qui provoque une usure rapide du système.

On connaît aussi d'après le document DE 20 2004 004 620, un système d'extraction et de rangement similaire à celui cité ci-dessus, hormis que ce système d'extraction et de rangement est composé d'un chariot qui coulisse sur une voie de guidage pour permettre l'extraction et le rangement d'un objet parmi les différentes étagères des armoires.

Les systèmes actuels présentent ainsi généralement l'inconvénient de ne pouvoir manipuler qu'un seul objet ou boîte à la fois, ce qui constitue une perte de temps et d'efficacité. En outre, les systèmes d'extraction et de rangement tels qu'exposés ci-dessus présentent une commande de système assez compliquée et de plus, ils ne sont pas très précis pour extraire et ranger une petite boîte, comme les boîtes de médicament par exemple. En outre, ces systèmes ne sont généralement pas capables de trouver une boîte tant qu'elle n'a pas été rangée à son emplacement définitif, c'est-à-dire lorsque les boîtes ont été introduites dans le système mais qu'elles n'ont pas encore été classées dans les armoires, ce qui peut par exemple poser des problèmes lorsqu'un client demande une telle boîte. Le pharmacien ne peut alors pas récupérer les boîtes sans ouvrir le distributeur automatique, ce qui interrompt son fonctionnement.

La présente invention a pour but de proposer un système d'extraction et de rangement qui évite au moins certains des inconvénients précités et qui permette d'assurer l'extraction et le rangement rapide d'un ou de plusieurs produits. Un autre but de l'invention est de proposer un distributeur automatique de produits utilisant un tel système d'extraction et de rangement. L'invention met aussi à disposition des procédés pour l'extraction et le rangement de produits en utilisant un tel distributeur automatique.

A cet effet, l'invention a pour objet un système d'extraction et de rangement, destiné à être commandé par un moyen de commande électronique apte à commander le déplacement dudit système d'extraction et de rangement, en coopération avec un moyen de déplacement, en fonction d'une demande d'un utilisateur, ledit système d'extraction et de rangement comportant un plateau, ledit plateau comportant des guides, des spatules étant aptes à coopérer avec lesdits guides à écartement variable, de manière que lesdites spatules soient aptes à coulisser par rapport auxdits guides entre une position rentrée dans laquelle lesdites spatules se trouvent sur ledit plateau et une position sortie dans laquelle une partie desdites spatules fait saillie de l'un des bords dudit plateau, ledit moyen de commande électronique étant apte à commander le déplacement desdites spatules par rapport audit plateau, caractérisé en ce que chacune desdites spatules comporte en son milieu, un volet fixe, déployé de façon à former par rapport à la direction longitudinale de ladite spatule un angle proche de 90°.

Ce système présente ainsi l'avantage de simplifier la commande du système. En outre, l'extraction et/ou le rangement de la ou des boîtes s'effectuent de manière plus simple et plus facile. Par ailleurs, plusieurs boîtes peuvent être extraites ou rangées en une seule manipulation, ce qui représente un gain de temps et ainsi un gain économique important.

Selon un mode de réalisation de l'invention, chacune desdites spatules comporte à au moins chacune de ses extrémités, sur son bord faisant face à l'autre desdites spatules, un revêtement adhérent, notamment en caoutchouc afin de faciliter la préhension des boîtes à extraire. Par ailleurs, afin d'amplifier l'adhérence entre les extrémités des spatules et les boîtes à extraire, le revêtement en caoutchouc peut être pourvu de rainures.

Selon une caractéristique de l'invention, lesdits guides sont disposés sur ledit plateau de manière sensiblement parallèle entre eux, un moyen de commande étant prévu sous le plateau (11) pour commander l'écartement entre lesdits guides.

Selon un mode de réalisation, le moyen de commande comprend :
- une tige filetée (27) mise en rotation par un actionneur (19) et sur laquelle se déplace un écrou (22),
- deux bras (15), parallèles entre eux et à l'axe (Z) des guides (29), portant au voisinage de leurs extrémités des pièces de contact (21) reliées aux guides (29) et traversant le plateau (11) à travers des ouvertures oblongues (24) perpendiculaires à l'axe (Z) des guides,
- deux bielles (17) articulées chacune à une extrémité au voisinage du point milieu de l'un des bras (15) et à l'autre extrémité audit écrou (22),
de sorte que la rotation de la tige filetée (27) entraîne le déplacement longitudinal de l'écrou (22) sur la tige (27) et, par l'intermédiaire des bielles (17), l'écartement ou le rapprochement relatif des bras (15) et, par l'intermédiaire des pièces de contact (21), celui des guides (29).

Selon un second mode de réalisation, le moyen de commande comprend :
- un pignon (233) mis en rotation par un actionneur (219) autour d'un axe fixe (234),
- deux bras (215), parallèles entre eux et à l'axe (Z) des guides (29), portant au voisinage de leurs extrémités des pièces de contact (221) reliées aux guides (29) et traversant le plateau (11) à travers des ouvertures oblongues (224) perpendiculaires à l'axe (Z) des guides,
- deux crémaillères perpendiculaire à l'axe (Z) des guides, toutes deux en combinaison avec ledit pignon (233), chaque crémaillère (231) étant solidaire à une de ses extrémités de l'un des bras (215), de sorte que la rotation dudit pignon (233) entraîne la translation des bras (215) et, par l'intermédiaire des pièces de contact (221), celle des guides (29).

De préférence, les moyens de commande comprennent également deux guides linéaires perpendiculaire à l'axe des guides (Z) dans lesquels coulissent au moins deux patins se situant aux deux extrémités des bras.

Ce système représente un moyen de commande de l'écartement entre les deux guides de translation permettant d'extraire et de charger des boîtes de différentes tailles d'une manière efficace, tout en restant économique.

Avantageusement, lesdites spatules sont entraînées par des courroies, lesdites courroies étant entraînées en translation par des roues d'entraînement motorisées, de manière que lesdites spatules soient aptes à faire saillie de l'un ou de l'autre de deux bords opposés dudit plateau.

De préférence, ledit système d'extraction et de rangement comporte au moins une cellule photoélectrique.

L'invention a également pour objet un distributeur automatique comportant deux armoires disposées face à face comportant des étagères et un système d'extraction et de rangement étant disposé entre lesdites armoires, un moyen de commande électronique permettant de déplacer ledit système d'extraction et de rangement entre lesdites armoires selon l'axe vertical (Y) et l'axe horizontal (X), qui est perpendiculaire à l'axe des guides (Z), desdites armoires, les spatules du système d'extraction et de rangement étant aptes à faire saillie de l'un ou de l'autre de deux bords opposés dudit plateau situés au regard desdites armoires (2,3,102,103), de manière que ledit système d'extraction et de rangement soit apte à coopérer indifféremment avec lesdites deux armoires, caractérisé en ce que chacune desdites spatules a une longueur qui est deux fois plus grande que la profondeur de chacune des armoires.

Selon un mode de réalisation de l'invention, une desdites armoires comporte un tapis roulant disposé horizontalement dans ladite armoire, ladite armoire comportant un plateau de rangement faisant saillie sur une face latérale de ladite armoire, ledit plateau de rangement comportant un rebord apte à se déplacer sur ledit plateau de rangement parallèlement à la direction dudit tapis roulant.

Selon un mode de réalisation de l'invention, une desdites armoires comporte une étagère de rangement, ladite étagère de rangement étant mobile en translation dans l'axe de la profondeur de ladite armoire, entre une position de repos dans laquelle ladite étagère de rangement est insérée dans ladite armoire, et une position de rangement dans laquelle ladite étagère de rangement est partiellement sortie de l'armoire, ladite étagère de rangement comportant plusieurs zones, chacune desdites zones étant identifiable par ledit moyen de commande électronique.

La présente invention met aussi à disposition un procédé d'extraction et de rangement associé au distributeur automatique selon la revendication 8, pour l'extraction dans une première armoire (2,3) et le rangement dans cette première armoire (2,3), de boîtes (6), comprenant les étapes consistant à :
- positionner le plateau au niveau de la rangée de l'armoire (2,3) où se situe la ou les objets (6) à extraire,
- à écarter sensiblement les spatules (12) et à les faire coulisser sur les guides de translation (29) de manière à englober les boîtes (6) qui se trouvent dans la rangée (7),
- à positionner lesdites spatules (12) au niveau de la dernière boîte à extraire (6a),
- à resserrer les spatules (12) de manière à prendre le nombre de boîte désiré,
- à faire glisser les boîtes sur le plateau (11) lors du mouvement de retour en position de rentrée des spatules (12) sur les guides de translation (29),
- à positionner le plateau (11) dans l'axe de la rangée (7) de l'armoire (2,3) où les boîtes doivent être rangées,
- à faire repousser les boîtes (6) dans leur emplacement lors de l'élongation des spatules (12) grâce au volet mécanique fixe (14) se trouvant au milieu des spatules (12),
- et à faire revenir les spatules (12) en position de rentrée.

La présente invention met par à disposition un procédé d'extraction et de rangement associé au distributeur automatique selon la revendication 8, pour l'extraction dans une première armoire (2,3) et le rangement dans une deuxième armoire (3,2), de boîtes (6), comprenant les étapes consistant à :
- positionner le plateau au niveau de la rangée de l'armoire (2,3) où se situe la ou les objets (6) à extraire,
- à écarter sensiblement les spatules (12) et à les faire coulisser sur les guides de translation (29) de manière à englober les boîtes (6) qui se trouvent dans la rangée (7),
- à positionner le plateau (11) dans l'axe de la rangée de l'armoire où les boîtes (6) doivent être rangées,
- à écarter les spatules (12) d'au moins la longueur de deux volets (14) réunis afin de faire passer lesdits volets de devant à derrière les boîtes (6),
- à resserrer les spatules (12) afin que les volets puissent jouer leur rôle de poussoir,
- à faire coulisser les spatules selon l'axe Z vers la rangée souhaitée de manière à ranger les boîtes,
- et à faire revenir les spatules (12) en position de rentrée.

La présente invention concerne ainsi un procédé de chargement original et facile à mettre en oeuvre. En effet, si l'utilisateur veut ranger les boîtes du même coté de l'armoire, alors, les volets mécaniques fixes situés au milieu des spatules vont permettre de faire glisser les boîtes en même temps que l'élongation des spatules lors de leur position de sortie, et ainsi de ranger les boîtes dans la rangée souhaitée de l'armoire. Si l'utilisateur souhaite ranger les boîtes d'une armoire à une autre, alors, après extraction des boîtes de l'armoire au plateau, les spatules vont s'écarter et coulisser de manière à ce que les volets fixes qui se situaient devant les boîtes, c'est-à-dire entre celles-ci et l'armoire où les boîtes doivent être rangées, se retrouvent désormais derrière celles-ci et ainsi puissent jouer leur rôle qui consiste à faire glisser les boîtes vers la rangée et l'armoire désirées. Ce procédé facilite grandement l'étape de chargement des boîtes.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.
Sur ces dessins :
- la figure 1 est une vue schématique simplifiée en perspective d'un distributeur automatique de produits selon un mode de réalisation de l'invention ;
- la figure 2 est une vue schématique simplifiée en perspective montrant trois rangées de boîtes disposées dans une armoire de la figure 1 ;
- la figure 3 est une vue schématique simplifiée en perspective du système d'extraction et de rangement du distributeur automatique de produits;
- la figure 4 est une vue en perspective de dessous d'un mode de réalisation du moyen de commande de l'écartement entre les guides de translation du système d'extraction et de rangement de la figure 3;
- la figure 5 est une vue de dessous d'un premier mode de réalisation du moyen de commande pour commander l'écartement entre les guides de translation du système d'extraction et de rangement présenté à la figure 4;
- la figure 6 est une vue en coupe transversale du moyen de commande de la figure 5 suivant l'axe A-A'.
- La figure 7 est un agrandissement de la coupe transversale de la figure 6
- la figure 8 est une vue de dessous d'un second mode de réalisation du moyen de commande pour commander l'écartement entre les guides de translation du système d'extraction et de rangement;
- les figures 9a à 9c sont des vues schématiques du distributeur de la figure 1 en coupe transversale montrant les étapes d'une opération d'extraction;
- les figures 10a à 10d sont des vues schématiques du distributeur de la figure 1 en coupe transversale montrant les étapes d'une opération de chargement ;
- La figure 11 montre une variante d'une armoire de la figure 1 ; et
- Les figures 12 et 13 montrent une deuxième variante d'une armoire de la figure 1.

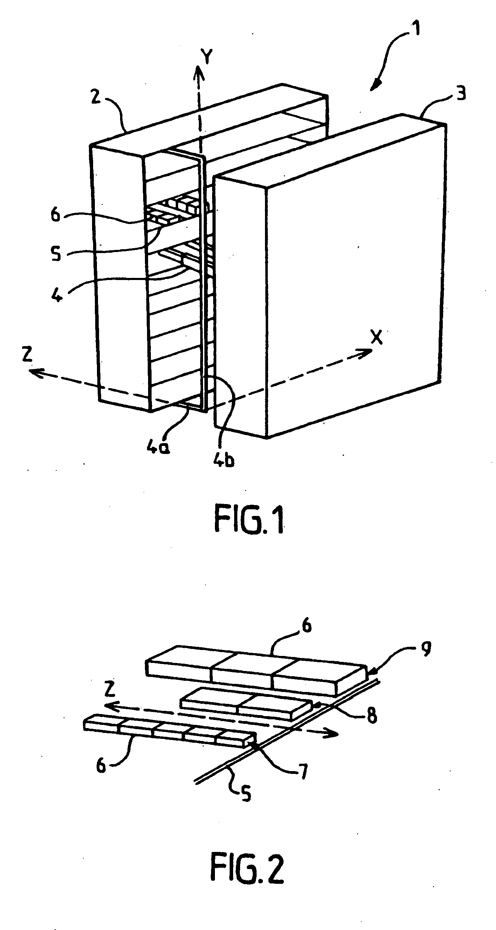

En se référant à la figure 1, on voit un distributeur automatique de produit (1). Le distributeur 1 a pour fonction d'assurer le rangement des boîtes (6), qui sont par exemple des boîtes de médicament, ainsi que d'extraire des boîtes (6) en fonction des besoins, par exemple lorsqu'un client demande un médicament.

Le distributeur (1) est commandé par un système de commande électronique (non représenté) qui comprend, de manière classique, des modules d'asservissement permettant d'asservir les différentes parties du distributeur, comme cela sera décrit en détail plus loin. Le système de commande électronique comporte également une mémoire lui permettant de mémoriser un certain nombre d'informations concernant les boîtes, telles que leurs dimensions ou leur code barre, ainsi que des informations concernant l'état du stock. Un tel système de commande est connu et ne sera pas décrit en détail ici.

Le distributeur 1 comporte deux armoires 2 et 3, parallèles entre elles et se faisant face, et un système d'extraction et de rangement (4). Des rampes de guidage 4a et 4b sont prévues, de manière à pouvoir positionner le système (4) au regard de n'importe quel point des armoires 2,3. Pour cela, les rampes 4a peuvent coulisser horizontalement le long des armoires 2,3 et le système (4) peut coulisser verticalement le long des rampes 4b. Le système de commande électronique permet de commander le déplacement du système (4) entre les deux armoires 2,3 selon l'axe horizontal X et l'axe vertical Y.

Les armoires 2,3 sont munies d'étagères horizontales (5). Les boîtes de produits (6) parallélépipédiques sont rangées sur les étagères (5). Comme cela est mieux visible sur la figure 2, les boîtes (6) sont rangées en fonction de leur taille et du produit qu'elles contiennent, c'est-à-dire par référence, une référence pouvant être identifiée par un code barre. La figure 2 montre trois rangées (7,8,9) de boîtes (6) de tailles différentes, les boîtes (6) de chaque rangée (7,8,9) pouvant par exemple contenir des médicaments. Les boîtes (6) d'une même référence sont rangées à plat et accolées les unes aux autres, dans le sens de la longueur des boîtes (6), selon l'axe Z. On notera que des boîtes (6) d'une même référence peuvent occuper plusieurs rangées dans l'armoire (2,3), en fonction des besoins.

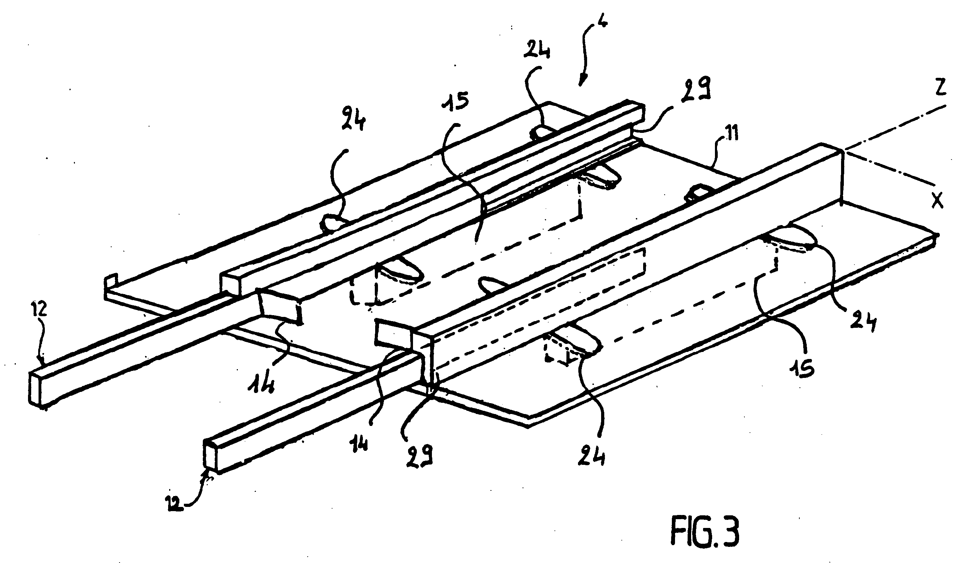

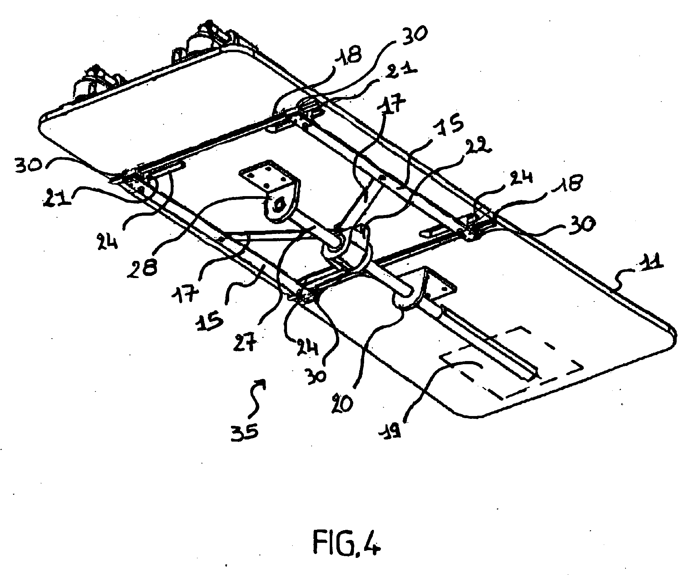

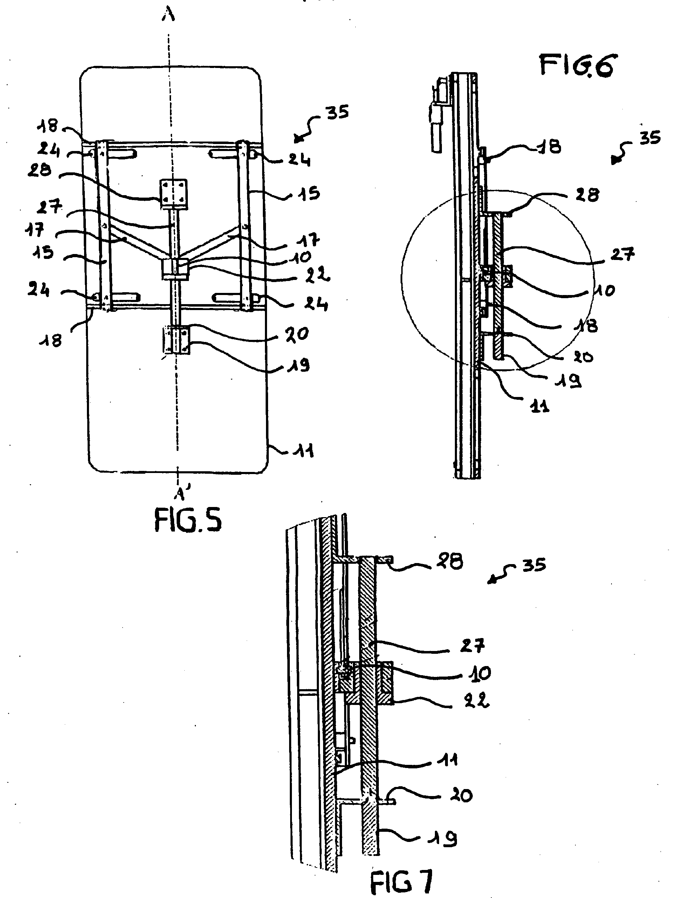

En se référant aux figures 3 à 8, on va maintenant décrire le système d'extraction et de rangement (4). Le système (4) comporte comme le montre la figure 3, un plateau (11) destiné à recevoir les boîtes (6) à déplacer, avant leur rangement dans une armoire (2,3) ou après leur extraction d'une armoire (2,3), comme cela sera décrit en détail plus loin. Le plateau (11) a une forme rectangulaire. Le système (4) comporte également deux spatules parallèles (12), déplaçables linéairement selon l'axe Z, à l'intérieur de guides (29). Les guides (29) sont disposés sur le plateau (11) de manière sensiblement parallèle l'un par rapport à l'autre. La longueur des guides (29) est sensiblement égale à la longueur du plateau (11), les guides (29) étant disposés parallèlement aux grands bords du plateau (11). L'écartement des spatules (12) selon l'axe X est variable. Pour cela, les guides (29) sont déplaçables selon l'axe X. L'écartement peut être réglé, selon un premier mode de réalisation, par le moyen de commande (35) représenté sur les figures 4 à 7. Ce moyen de commande (35) est composé principalement de pièces de contact (21) portés par deux bras (15) au voisinage de leurs extrémités, de deux bielles (17), d'ouvertures (24) oblongues, d'une liaison tige filetée/écrou et d'un actionneur (19). Ces différents éléments mécaniques sont agencés comme suit :
- tout d'abord, au moins quatre pièces de contact (21) relient les deux guides (29) disposés sur le plateau (11) aux deux bras (15) situés en dessous du plateau (11), grâce à des ouvertures oblongues (24) parallèles à l'axe (X), (lui même perpendiculaire à l'axe des guides (Z)), se situant vers les extrémités des bras (15), les formes respectives des pièces de contact (21) et des ouvertures (24) autorisent une translation des bras et ainsi une translation des guides (29) et des spatules (12) sur toute la longueur des ouvertures (24) perpendiculaires à l'axe (Z) ;
- puis, la rotation de deux bielles (17) articulées chacune à une extrémité au voisinage du point milieu de l'un des bras (15) par une liaison pivot d'axe (X) et à l'autre extrémité à un écrou (22) également par une liaison pivot d'axe (X) entraînent la translation des bras (15) sur les ouvertures (24) ;
- en outre, une tige filetée (27) coopère avec l'écrou (22) pour former une liaison tige filetée/écrou d'axe AA', représentée sur la figure 5, qui entraîne la rotation des deux bielles (17), les deux bielles étant reliées au niveau d'un centre de rotation de renvois d'axe (10) ;
- enfin, un actionneur, supporté par un support actionneur (20), entraîne la rotation de la tige filetée sur laquelle se déplace en translation l'écrou (22). Dans un mode de réalisation préféré, le couple tige filetée/écrou sera plus particulièrement représenté par le couple vis à billes/ palier à billes.
- Par ailleurs, les deux bras (15) possèdent à chacune de leurs extrémités un patin (30) coulissant en fonction du mouvement de translation desdits bras (15) sur des guides linéaires (18) perpendiculaire à l'axe (Z), qui peuvent être par exemple des glissières ou des évidements situés sur le plateau (11).

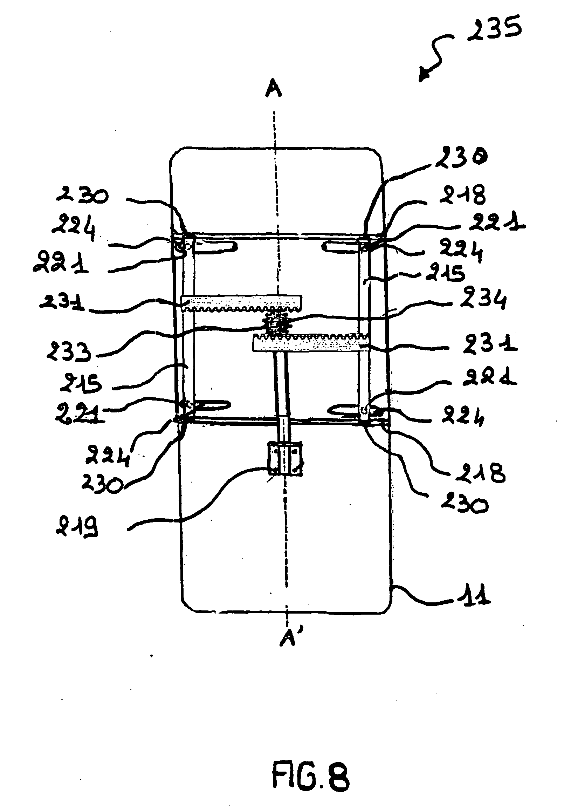

En se référant à la figure 8, on va maintenant décrire un second mode de réalisation pour le moyen de commande (235). Ce moyen de commande (235) est composé :
- d'un actionneur (219) qui entraîne en rotation un pignon à crémaillères (233) autour d'un axe fixe (234),
- de deux crémaillères perpendiculaire à l'axe (Z) des guides, toutes deux en combinaison avec le pignon (233) afin de transformer un mouvement rotatif en un mouvement rectiligne. Chaque crémaillère (231) est solidaire à une de ses extrémités de l'un des bras (215), de sorte que la rotation du pignon à crémaillères (233) entraîne la translation des bras (215).
- Ce moyen de commande est aussi composé comme le moyen de commande selon le premier mode de réalisation 35. Ainsi, le moyen de commande (235) comprend également au moins quatre pièces de contact (221) reliant les deux guides (29) disposés sur le plateau (11) aux deux bras (215) situés en dessous du plateau (11), grâce à des ouvertures oblongues (224) parallèles à l'axe (X), (lui-même perpendiculaire à l'axe des guides (Z)), se situant vers les extrémités des bras (215). Les formes respectives des pièces de contact (221) et des ouvertures (224) autorisent une translation des bras et ainsi une translation des guides (29) et des spatules (12) sur toute la longueur des ouvertures (224) perpendiculaires à l'axe (Z).
   Par conséquent, le mouvement de translation des bras (215) entraîne en translation les guides (29), permettant ainsi l'écartement desdits guides sur toute la longueur des ouvertures situées sur le plateau (11).

La translation des bras (215) permet par le même mode de réalisation cité ci-dessus

La longueur des spatules (12) est sensiblement égale à la longueur des guides (29). Par contre, il est essentiel que la longueur des spatules soit égale à deux fois celle de la profondeur d'une armoire (2,3). Par ailleurs, chaque spatule (12) est ornée, au moins à chacune de leur extrémité, d'un revêtement adhérent, par exemple des bandes de caoutchouc afin d'offrir l'adhérence nécessaire à la préhension des boîtes. De plus, chaque spatule est munie en son milieu sur son bord faisant face à la deuxième spatule (12) d'un volet fixe, non escamotable (14). Les deux volets (14) sont fixes dans une position déployée dans laquelle ils forment un angle avec les spatules (12), l'angle étant sensiblement égal à 90°. Chaque volet fixe (14), mesure par exemple 1,5 cm de long.

Les spatules (12) sont entraînées par une courroie coopérant avec leur partie supérieure selon divers modes de réalisation possibles. La courroie peut par exemple être crantée. Dans ce cas, la partie supérieure des spatules (12) est également crantée. La courroie peut aussi être lisse. Dans ce cas là, la spatule est liée en son milieu à la courroie qui entraîne ladite spatule suivant l'axe Z. La courroie est généralement entraînée par une roue d'entraînement motorisée.

On va maintenant décrire le fonctionnement du distributeur 1 selon le mode de réalisation.

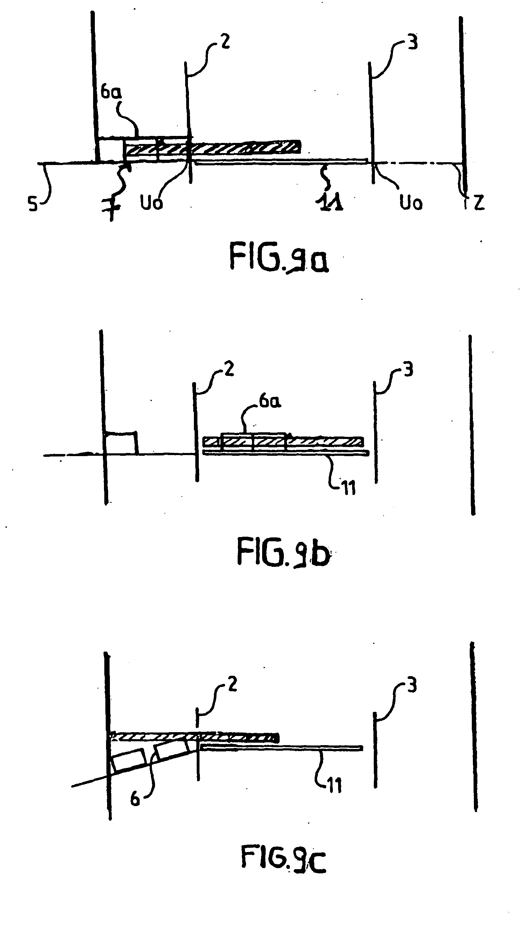

En se référant aux figures 9a à 9c, on va maintenant décrire une opération d'extraction de deux boîtes (6) de la rangée (7) de l'armoire (2), supposée en contenir trois. On notera qu'il s'agit d'un exemple d'opération, le nombre de boîtes 6 à extraire pouvant être quelconque, de même que la rangée. En outre, une extraction de l'armoire (3) s'effectuerait de manière similaire.

Initialement, les boîtes (6) sont alignées selon l'axe Z, sans espace entre elles. Dans la rangée(7), les boîtes (6) occupent des positions à compter de la position U0+pL où p est le nombre de boîtes (6) précédemment extraites depuis le dernier chargement, comme cela sera décrit en détail plus loin. L est la longueur d'une boîte (6) de la rangée 7 et U0 le point de l'armoire (2) situé en limite de l'espace intérieur. Dans l'exemple représenté sur la figure 9a, les boîtes (6) sont alignées à partir de U0, ce qui correspond à p=0.

Dans un premier temps, le système (4) se positionne selon les axes X et Y de manière à se trouver au regard de la rangée (7) et l'écartement entre les spatules (12), selon l'axe X est réglé en fonction de la largeur des boîtes (6) de la rangée (7). Par exemple, l'écartement entre les spatules (12), est choisi supérieur à la largeur des boîtes (6) d'environ 10mm, ce qui permet de garder une marge de 5mm de chaque côté des boîtes (6) de la rangée (7). Lorsque le système (4) est positionné, les spatules (12) sont déplacées selon l'axe Z de part et d'autre des boîtes (6) de la rangée (7) jusqu'à ce que les extrémités des spatules soient situés au milieu ou vers l'extrémité de la boîte 6a, de manière à ce que les spatules englobent suffisamment la boîte la plus éloignée sur la rangée (7), qui correspond à la boîte 6 la plus au fond de l'armoire 2 parmi les boîtes 6 à extraire, ce qui correspond à la position U0+pL+(n-1)L+L/2, n correspondant au nombre de boîtes à extraire, c'est-à-dire n=3 dans l'exemple. Les spatules (12) sont ensuite resserrées, de façon que les spatules (12) enserrent la boîte 6a. Cet état est représenté sur la figure 9a.

Lorsque les spatules (12) enserrent la boîte 6a, elles sont déplacées selon l'axe Z en direction du plateau (11), jusqu'à ce que les spatules (12) se trouvent entièrement rentrées dans les guides (29). Cela a pour effet d'entraîner un déplacement des boîtes (6) selon l'axe Z en direction du plateau (11). On notera que lorsque les spatules (12) sont complètement rentrées dans les guides (29), les boîtes (6) se trouvent sur le plateau sur la première moitié de celui-ci (11). Cet état est représenté sur la figure 9b.

A ce moment, le système (4) se déplace selon les axes X et Y jusqu'à l'endroit souhaité pour l'éjection. Si l'on souhaite éjecter les boîtes du côté de l'armoire 2, les spatules (12) s'écartent légèrement et coulissent selon l'axe Z afin d'éjecter ainsi les deux boîtes (6) grâce au deux volets fixes déployés (14). Cet état est représenté sur la figure 9c. Une fois l'éjection terminée, les spatules 12 reviennent en position au dessus du plateau (11). Si l'on veut éjecter les boîtes du coté de l'armoire 3, les spatules s'écartent préalablement d'au moins la longueur des deux volets (14) réunis et coulissent vers l'armoire 2 de façon à ce que les volets (14) qui se trouvaient entre l'armoire 3 et les boîtes à ranger (6), se retrouvent désormais derrière les boîtes à ranger (6), les spatules se resserrent légèrement, mais pas complètement, pour que les volets (14) puissent faire glisser les boîtes (6) vers la rangée (7) de l'armoire 3 lors de l'élongation des spatules (12) suivant l'axe Z. Puis, les spatules (12) reviennent en position de rentrée sur les guides (29).

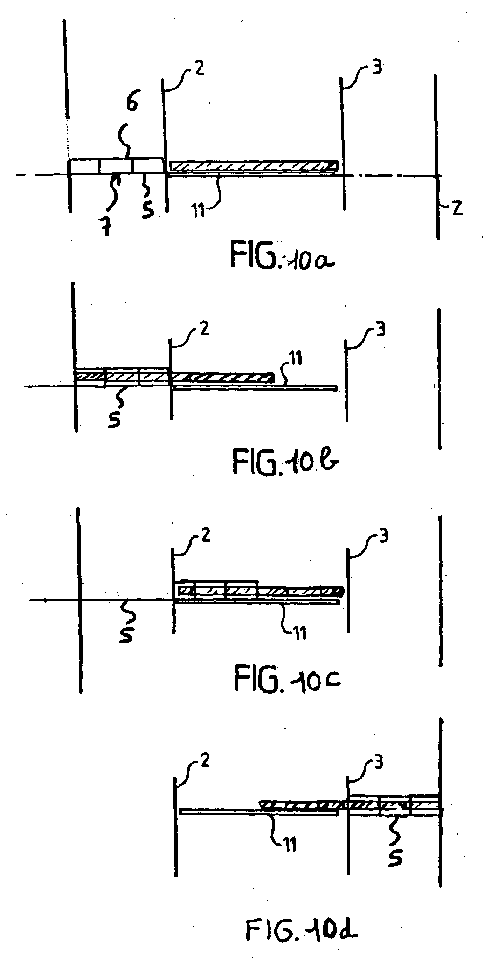

En se référant aux figures 10a à 10d, on va maintenant décrire une opération de chargement.

Les boîtes (6) à charger sont préalablement alignées manuellement sur une rangée (7) de l'armoire 2. Pour faciliter le rangement manuel, un repérage est matérialisé par un rectangle (non représenté) dessiné sur l'étagère 5.

Dans un premier temps, le système (4) se positionne, par un déplacement selon les axes X et Y, au regard de la rangée (7) de boîtes (6) à charger. Cet état est représenté sur la figure 10a. L'écartement des spatules 12 est commandé de manière à pouvoir coulisser de part et d'autre de la rangée (7). Pour cela, on prévoit par exemple une marge de 10 mm de chaque côté de la rangée (7). Cette marge laissée de part et d'autre de la rangée (7) permet notamment de tenir compte de l'éventuelle imprécision du placement manuel. Une fois que les spatules (12) ont été introduites dans l'armoire 2, elles peuvent être légèrement resserrées, ou alternativement resserrées et écartées plusieurs fois afin que les boîtes (6), qui peuvent avoir été rangées de manière légèrement désordonnée, se trouvent réalignées.

Lorsque le système (4) est positionné, les spatules (12) sont déplacées selon l'axe Z de manière à coulisser de part et d'autre de la rangée (7) de boîtes (6) jusqu'au fond de l'armoire 2. Cet état est représenté sur la figure 10b. L'enfoncement maximal des spatules (12) dans l'armoire 2 correspond à une position dans laquelle les volets (14) se trouvent au niveau de U0, étant donné que la longueur d'une spatule est deux fois plus grande que la profondeur d'une armoire (2,3).

Lorsque les spatules (12) ont été déplacées jusqu'au fond de l'armoire 2, les volets déployés (14) se trouvent, comme cité ci-dessus, au point U0 et les spatules (12) sont resserrées. A ce moment, les spatules (12) coulissent selon l'axe Z de manière à revenir en position au-dessus du plateau (11). Il en résulte une translation de même sens et de même distance des boîtes (6) de la rangée (7). Les boîtes (6) se situent sur une moitié du plateau entre une extrémité des spatules (12) et les volets fixes (14). Cet état est représenté sur la figure 10c.

A ce moment, le système (4) avec son plateau (11) chargé se déplace selon les axes X et Y jusqu'à l'emplacement de destination voulu pour le rangement. Par exemple, si l'armoire de destination est l'armoire (3), les spatules (12) s'écartent d'au moins la distance des deux volets (14) et coulissent suivant l'axe Z de manière à faire passer les volets fixes (14) qui se trouvent entre les boîtes et l'armoire 3, derrière les boîtes (6). Puis, lors de l'élongation des spatules vers l'armoire 3, les boîtes (6) glissent grâce aux volets (14) vers la rangée souhaitée, et sont rangées jusqu'à ce que les volets (14) arrivent en limite (point U0) de l'armoire 3. Cet état est représenté sur la figure 10d.

Une fois le rangement effectué, une étape supplémentaire permet de recoller toutes les boîtes (6), c'est-à-dire de supprimer tout espace entre les boîtes (6) de la rangée (7). En effet, lors de l'opération d'extraction, on a supposé que toutes les boîtes (6) étaient accolées, sans espace entre elles. Or, si lors d'un chargement, on charge un nombre de boîtes (6) inférieur à celui des boîtes (6) prélevées depuis le chargement précédent, il y a un espace entre les boîtes (6) restantes et les boîtes (6) chargées. Pour éviter cela, les spatules (12) coulissent jusqu'au fond de l'armoire (3), puis les spatules (12) se resserrent de manière à enserrer toutes les boîtes disposées sur la rangée et coulissent en direction du plateau (11) jusqu'à ce que les volets 14 arrivent au milieu du plateau 11. A ce moment, toutes les boîtes (6) sont disposées sur une moitié du plateau (11), entre les volets fixes et U0. Puis, les spatules 12 s'écartent légèrement de façon à ce que les volets puissent jouer leur rôle de poussoir et coulissent jusqu'au fond de l'armoire 3, les boîtes (6) se trouvent alors rangées de manière accolée, sans aucun espace entre elles, à partir de la position U0. Lorsque l'opération de chargement est terminée, les spatules (12) coulissent en position médiane au dessus du plateau.

D'autres modes de réalisation sont possibles. Le moyen de commande (35) de l'écartement des guides (29) peut en effet être placé au-dessus du plateau par un système d'accroche qui relie ce système de commande (35) au plateau (11) sur ses bords. Par ailleurs, dans ce mode de réalisation, le plateau plein peut être remplacé par un plateau creux en son milieu qui laisserait directement tomber les boîtes sur un tapis roulant situé en contrebas entre les deux armoires du système de distribution, lors de l'écartement des guides se situant sur le plateau. Ce mode permettrait de réduire considérablement le temps d'extraction des boîtes.

D'autres variantes sont possibles, par exemple, dans le premier mode de réalisation, une ou plusieurs cellules photoélectriques peuvent permettre de déterminer l'instant où le rayon d'une cellule est coupé par la première boîte et l'instant où il ne l'est plus, après le passage de la dernière boîte. Simultanément, la distance parcourue par les spatules entre ces deux instants est déterminée. La distance parcourue est divisée par la longueur connue d'une boîte, ce qui permet de déterminer le nombre de boîtes qui ont été extraites. On notera que si le nombre obtenu n'est pas un entier, aux tolérances près, le système de commande détecte une erreur, qui peut être due par exemple au mélange de plusieurs boîtes de taille différente. Ce système permet également de réaliser des inventaires automatiques du stock, par exemple après une panne du distributeur pendant laquelle des prélèvements manuels ont pu être effectués.

Un contrôle de cohérence des largeurs et des hauteurs est également possible, par exemple à l'aide de deux télémètres, l'un étant disposé à l'extrémité du plateau dans le sens de la largeur, et l'autre étant disposé au dessus du plateau. Ces instruments doivent donner une largeur (respectivement une hauteur) constante tout le long de la rangée, lorsque des boîtes sont amenées sur le plateau. Si ce n'est pas le cas, cela permet de détecter une erreur, par exemple un mélange de boîtes de tailles différentes. Dans ce cas, le processus de chargement peut être interrompu et le contenu du plateau déchargé vers un emplacement réservé aux erreurs de chargement.

En outre, l'entraînement des spatules peut s'effectuer par tout moyen, on peut par exemple utiliser une courroie percée de trous dans sa longueur, la partie supérieure de la spatule étant dans ce cas munie de picots.

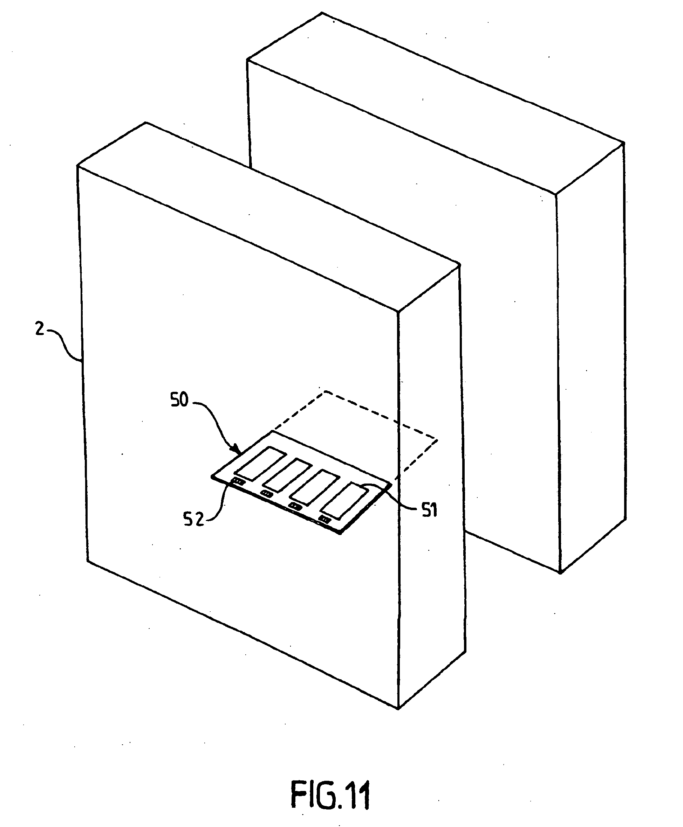

Une étagère de rangement manuel (50) peut être prévue dans une des armoires (2,3) ou dans les deux, pour faciliter l'étape de rangement manuel. L'étagère 50 est représentée sur la figure 11. L'étagère (50) est mobile en translation selon l'axe Z entre une position de repos dans laquelle l'étagère (50) est insérée dans l'armoire 2 et une position de rangement, représentée sur la figure 11, dans laquelle l'étagère (50) est partiellement sortie de l'armoire 2. Des symboles (51), par exemple des rectangles, permettent de repérer facilement où les boîtes doivent être déposées. Chaque symbole (51) est associé à un code barre (52). Lorsqu'une rangée de boîtes d'une même référence est déposée sur l'étagère (50) au niveau d'un symbole (51), le code barre d'une boîte de la rangée et le code barre (52) associé au symbole 51 sont mémorisés par le système de commande. Une fois remplie, l'étagère (50) est repoussée en position de repos dans l'armoire 2. Les boîtes sont ensuite automatiquement rangées à leur emplacement définitif par des opérations de chargement. On notera qu'en cas de besoin il est ainsi possible de trouver une boîte avant son rangement définitif. Les boîtes sont donc immédiatement disponibles dès leur dépôt sur l'étagère (50).

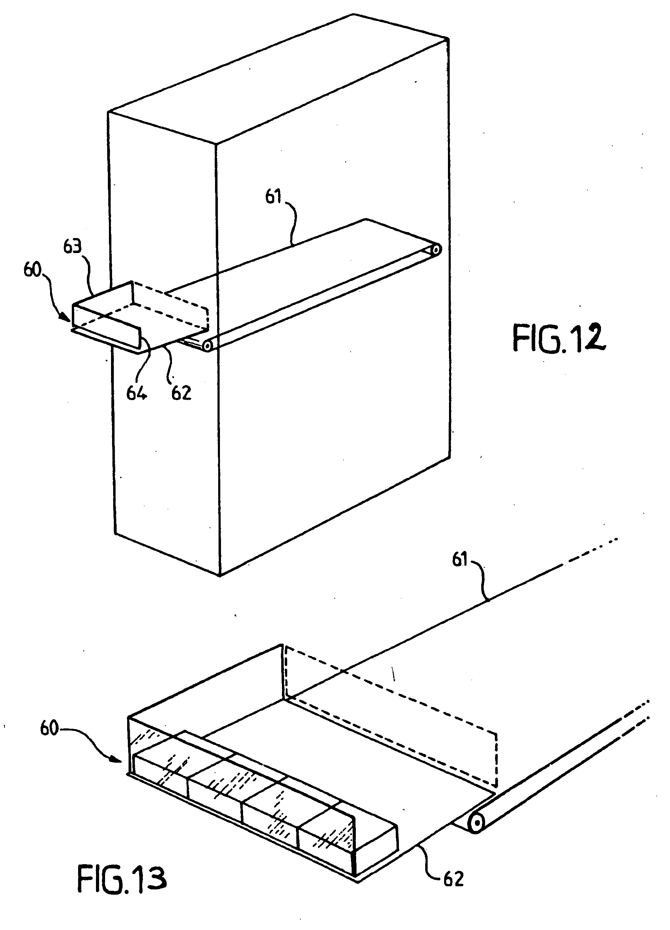

Les figures 12 et 13 montrent une autre variante d'un système permettant de faciliter le rangement manuel. L'armoire 2 comporte un chargeur (60) et un tapis roulant (61). Le tapis roulant (61) est disposé dans l'armoire 2 de manière horizontale, sa longueur étant sensiblement égale à la largeur de l'armoire 2. Le chargeur (60) comporte un plateau (62). Le chargeur (60) est disposé sur une face latérale de l'armoire 2, de manière qu'un bord du plateau (62) soit situé au niveau d'une extrémité du tapis roulant (61). Le plateau (62) présente sur un de ses bords parallèles au tapis (61) un rebord fixe (63). Un deuxième rebord (64), disposé sur le plateau (62) transversalement au tapis (61), est mobile entre les deux bords du plateau (62) perpendiculaires au tapis (61). Au début d'une opération de rangement, le rebord (64) est disposé sur le bord opposé à l'armoire 2. L'opérateur dépose les boîtes d'une même référence, après les avoir identifiées par leur code barre, sur le plateau (62), alignées le long du rebord (64), accolées les unes aux autres dans le sens de la longueur. A ce moment, un système de déclenchement (non représenté), par exemple un bouton de type interrupteur, permet de déclencher le rangement. A ce moment, le rebord (64) se déplace en direction du tapis (61), ce qui a pour effet de déplacer les boîtes jusqu'au tapis (61). Simultanément, un système de commande du tapis permet d'avancer le tapis (61) d'une distance sensiblement égale à la largeur de la rangée de boîte. Lorsque la rangée de boîtes a été déposée sur le tapis (61), le rebord (64) est ramené à sa position initiale. Les boîtes sont ensuite chargées à leur emplacement définitif à partir du tapis (61). On notera que le système de commande à mémoriser la position des boîtes sur le tapis (61), ce qui permet également de pouvoir récupérer une boîte avant son rangement définitif.

Bien que l'invention ait été décrite en relation avec plusieurs modes de réalisations particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système d'extraction et de rangement, destiné à être commandé par un moyen de commande électronique apte à commander le déplacement dudit système d'extraction et de rangement (4), en coopération avec un moyen de déplacement (4a,4b), en fonction d'une demande d'un utilisateur, ledit système d'extraction et de rangement (4) comportant un plateau (11), ledit plateau comportant des guides (29), des spatules (12) étant aptes à coopérer avec lesdits guides, de manière que lesdites spatules soient aptes à coulisser par rapport auxdits guides entre une position rentrée dans laquelle lesdites spatules se trouvent sur ledit plateau et une position sortie dans laquelle une partie desdites spatules fait saillie de l'un des bords dudit plateau, les guides (29) présentant entre eux un écartement variable apte à entraîner l'écartement ou le rapprochement desdites spatules, ledit moyen de commande électronique étant apte à commander le déplacement desdites spatules par rapport audit plateau, **caractérisé en ce que** chacune desdites spatules comporte en son milieu, un volet (14) fixe, déployé de façon à former par rapport à la direction longitudinale de ladite spatule un angle proche de 90

2. Système d'extraction et de rangement selon la revendication 1, **caractérisé en ce que** chacune desdites spatules comporte à au moins chacune de ses extrémités, sur son bord faisant face à l'autre desdites spatules, un revêtement, notamment en caoutchouc, afin de faciliter l'adhérence entre les boîtes à extraire et les spatules.

3. Système d'extraction et de rangement selon la revendication 1, **caractérisé en ce que** lesdits guides (29) sont disposés sur ledit plateau (11) de manière sensiblement parallèle entre eux, un moyen de commande (35) étant prévu sous le plateau (11) pour commander l'écartement entre lesdits guides.

4. Système d'extraction et de rangement selon la revendication 3, **caractérisé en ce que** le moyen de commande comprend :
- une tige filetée (27) mise en rotation par un actionneur (19) et sur laquelle se déplace un écrou (22),
- deux bras (15), parallèles entre eux et à l'axe (Z) des guides (29), portant au voisinage de leurs extrémités des pièces de contact (21) reliées aux guides (29) et traversant le plateau (11) à travers des ouvertures oblongues (24) perpendiculaires à l'axe (Z) des guides,
- deux bielles (17) articulées chacune à une extrémité au voisinage du point milieu de l'un des bras (15) et à l'autre extrémité audit écrou (22),
de sorte que la rotation de la tige filetée (27) entraîne le déplacement longitudinal de l'écrou (22) sur la tige (27) et, par l'intermédiaire des bielles (17), l'écartement ou le rapprochement relatif des bras (15) et, par l'intermédiaire des pièces de contact (21), celui des guides (29).

5. Système d'extraction et de rangement selon la revendication 3, **caractérisé en ce que** le moyen de commande comprend :
- un pignon (233) mis en rotation par un actionneur (219) autour d'un axe fixe (234),
- deux bras (215), parallèles entre eux et à l'axe (Z) des guides (29), portant au voisinage de leurs extrémités des pièces de contact (221) reliées aux guides (29) et traversant le plateau (11) à travers des ouvertures oblongues (224) perpendiculaires à l'axe (Z) des guides,
- deux crémaillères perpendiculaire à l'axe (Z) des guides, toutes deux en combinaison avec ledit pignon (233), chaque crémaillère (231) étant solidaire à une de ses extrémités de l'un des bras (215), de sorte que la rotation dudit pignon (233) entraîne la translation des bras (215) et, par l'intermédiaire des pièces de contact (221), celle des guides (29).

6. Système d'extraction et de rangement selon les revendications 3 à 5, **caractérisé en ce que** les moyens de commande comprennent également deux guides linéaires (18, 218) perpendiculaire à l'axe des guides (Z), dans lesquels coulissent au moins deux patins (30, 230) se situant aux deux extrémités des bras 15.

7. Système d'extraction et de rangement selon la revendication 1, **caractérisé en ce que** lesdites spatules sont entraînées en translation par des courroies, lesdites courroies étant entraînées par des roues d'entraînement motorisées, de manière que lesdites spatules soient aptes à faire saillie de l'un ou de l'autre de deux bords opposés dudit plateau (11).

8. Système d'extraction et de rangement selon la revendication 1, **caractérisé en ce qu'**il comporte au moins une cellule photoélectrique (140).

9. Distributeur automatique comportant deux armoires (2,3) disposées face à face comportant des étagères (5) et un système d'extraction et de rangement (4) selon la revendication 1 étant disposé entre lesdites armoires (2,3), un moyen de commande électronique permettant de déplacer ledit système d'extraction et de rangement entre lesdites armoires selon l'axe vertical (Y) et l'axe horizontal (X), qui est perpendiculaire à l'axe des guides (Z), desdites armoires, les spatules (12) du système d'extraction et de rangement (4) étant aptes à faire saillie de l'un ou de l'autre de deux bords opposés dudit plateau situés au regard desdites armoires (2,3), de manière que ledit système d'extraction et de rangement soit apte à coopérer indifféremment avec lesdites deux armoires (2,3), **caractérisé en ce que** chacune desdites spatules (12) a une longueur qui est deux fois plus grande que la profondeur de chacune des armoires (2,3).

10. Distributeur automatique selon la revendication 9, **caractérisé en ce qu'**une desdites armoires (2,3) comporte un tapis roulant (61) disposé horizontalement dans ladite armoire, ladite armoire comportant un plateau de rangement (62) faisant saillie sur une face latérale de ladite armoire, ledit plateau de rangement comportant un rebord (64) apte à se déplacer sur ledit plateau de rangement parallèlement à la direction dudit tapis roulant.

11. Distributeur automatique selon la revendication 9, **caractérisé en ce qu'**une desdites armoires (2,3) comporte une étagère de rangement (50), ladite étagère de rangement étant mobile en translation dans l'axe de la profondeur (Z) de ladite armoire, entre une position de repos dans laquelle ladite étagère de rangement est insérée dans ladite armoire, et une position de rangement dans laquelle ladite étagère de rangement est partiellement sortie de l'armoire, ladite étagère de rangement comportant plusieurs zones (51), chacune desdites zones étant identifiable par ledit moyen de commande électronique.

12. Procédé d'extraction et de rangement associé au distributeur automatique selon la revendication 9, pour l'extraction dans une première armoire (2,3) et le rangement dans cette première armoire (2,3), de boîtes (6), comprenant les étapes consistant à :
- positionner le plateau au niveau de la rangée de l'armoire(2,3) où se situe la ou les objets (6) à extraire,
- à écarter sensiblement les spatules (12) et à les faire coulisser sur les guides de translation (29) de manière à englober les boîtes (6) qui se trouvent dans la rangée (7),
- à positionner lesdites spatules (12) au niveau de la dernière boîte à extraire (6a),
- à resserrer les spatules (12) de manière à prendre le nombre de boîte désiré,
- à faire glisser les boîtes sur le plateau (11) lors du mouvement de retour en position de rentrée des spatules (12) sur les guides de translation (29),
- à positionner le plateau (11) dans l'axe de la rangée (7) de l'armoire (2,3) où les boîtes doivent être rangées,
- à faire repousser les boîtes (6) dans leur emplacement lors de l'élongation des spatules (12) grâce au volet mécanique fixe (14) se trouvant au milieu des spatules (12),
- et à faire revenir les spatules (12) en position de rentrée.

13. Procédé d'extraction et de rangement associé au distributeur automatique selon la revendication 9, pour l'extraction dans une première armoire (2,3) et le rangement dans une deuxième armoire (3,2), de boîtes (6), comprenant les étapes consistant à :
- positionner le plateau au niveau de la rangée de l'armoire (2,3) où se situe la ou les objets (6) à extraire,
- à écarter sensiblement les spatules (12) et à les faire coulisser sur les guides de translation (29) de manière à englober les boîtes (6) qui se trouvent dans la rangée (7),
- à positionner le plateau (11) dans l'axe de la rangée de l'armoire où les boîtes (6) doivent être rangées,
- à écarter les spatules (12) d'au moins la longueur de deux volets (14) réunis afin de faire passer lesdits volets de devant à derrière les boîtes (6),
- à resserrer les spatules (12) afin que les volets puissent jouer leur rôle de poussoir,
- à faire coulisser les spatules selon l'axe Z vers la rangée souhaitée de manière à ranger les boîtes,
- et à faire revenir les spatules (12) en position de rentrée.

## Claims

1. System for extraction and storage, which is designed to be controlled by an electronic control means which can control the displacement of the said extraction and storage system (4) by co-operating with a displacement means (4a, 4b) on the basis of a request by a user, the said extraction and storage system (4) comprising a plate (11), the said plate comprising guides (29), paddles (12) which can co-operate with the said guides, such that the said paddles can slide relative to the said guides, between a retracted position in which the said paddles are on the said plate, and an extended position in which part of the said paddles projects from one of the edges of the said plate, the guides (29) having between them variable spacing which can give rise to movement of the said paddles away from, or towards one another, the said electronic control means being able to control the displacement of the said paddles relative to the said plate, **characterised in that** each of the said paddles comprises in its middle a fixed flap (14), which is deployed such as to form an angle close to 90°relative to the longitudinal direction of the said paddle.

2. System for extraction and storage according to claim 1, **characterised in that** each of the said paddles comprises, at each of its ends at least, on its edge which faces the other one of the said paddles, a coating, which in particular is made of rubber, in order to facilitate the adhesion between the boxes to be extracted and the paddles.

3. System for extraction and storage according to claim 1, **characterised in that** the said guides (29) are disposed on the said plate (11) such that they are substantially parallel to one another, a control means (35) being provided beneath the plate (11) in order to control the spacing between the said guides.

4. System for extraction and storage according to claim 3, **characterised in that** the control means comprises:
- a threaded rod (27) which is rotated by an actuator (19), and on which a nut (22) is displaced;
- two arms (15), which are parallel to one another and to the axis (Z) of the guides (29), and bear, in the vicinity of their ends, contact parts (21) which are connected to the guides (29) and pass through the plate (11), through oblong openings (24) which are perpendicular to the axis (Z) of the guides;
- two connecting rods (17) which are each articulated at one end in the vicinity of the mid-point of one of the arms (15), and at the other end on the said nut (22),
such that the rotation of the threaded rod (27) gives rise to the longitudinal displacement of the nut (22) on the rod (27), and, by means of the connecting rods (17), to the relative movement away from, or towards one another of the arms (15), and, by means of the contact parts (21), to that of the guides (29).

5. System for extraction and storage according to claim 3, **characterised in that** the control means comprises:
- a pinion (233) which is rotated by an actuator (219) around a fixed shaft (234);
- two arms (215), which are parallel to one another and to the axis (Z) of the guides (29), and bear in the vicinity of their ends contact parts (221) which are connected to the guides (29), and pass through the plate (11), through oblong openings (224) which are perpendicular to the axis (Z) of the guides;
- two racks which are perpendicular to the axis (Z) of the guides, both in combination with the said pinion (233), each rack (231) being integral at one of its ends with one of the arms (215), such that the rotation of the said pinion (233) gives rise to the translation of the arms (215), and, by means of the contact parts (221), to that of the guides (29).

6. System for extraction and storage according to claims 3 to 5, **characterised in that** the control means also comprise two linear guides (18, 218) which are perpendicular to the axis of the guides (Z), in which there slide at least two sliding blocks (30, 230) which are situated at both ends of the arms 15.

7. System for extraction and storage according to claim 1, **characterised in that** the said paddles are translated by belts, the said belts being driven by motorised drive wheels, such that the said paddles can project from one or the other of two opposite sides of the said plate (11).

8. System for extraction and storage according to claim 1, **characterised in that** it comprises at least one photoelectric cell (140).

9. Automatic distributor comprising two cupboards (2, 3) which are arranged opposite one another, comprising shelves (5), and a system for extraction and storage (4) according to claim 1 being arranged between the said cupboards (2, 3), an electronic control means making it possible to displace the said extraction and storage system between the said cupboards according to the vertical axis (Y) and the horizontal axis (X), which is perpendicular to the axis of the guides (Z) of the said cupboards, the paddles (12) of the extraction and storage system (4) being able to make one or the other of two opposite edges of the said plate situated facing the said cupboards (2, 3) project, such that the said extraction and storage system can co-operate equally well with the said two cupboards (2, 3), **characterised in that** each of the said paddles (12) has a length which is twice as large as the depth of each of the cupboards (2, 3).

10. Automatic distributor according to claim 9, **characterised in that** one of the said cupboards (2, 3) comprises a conveyor belt (61) which is arranged horizontally in the said cupboard, the said cupboard comprising a storage plate (62) which projects on a lateral surface of the said cupboard, the said storage plate comprising a shoulder (64) which can be displaced on the said storage plate parallel to the direction of the said conveyor belt.

11. Automatic distributor according to claim 9, **characterised in that** one of the said cupboards (2, 3) comprises a storage shelf (50), the said storage shelf being mobile in translation along the axis of the depth (Z) of the said cupboard, between a position of rest in which the said storage shelf is inserted in the said cupboard, and a position of storage in which the said storage shelf projects partially from the cupboard, the said storage shelf comprising a plurality of areas (51), each of the said areas being able to be identified by the said electronic control means.

12. Method for extraction and storage associated with the automatic distributor according to claim 9, for extraction from a first cupboard (2, 3), and storage in this first cupboard (2, 3), of boxes (6), comprising the steps consisting of:
- positioning the plate at the level of the row in the cupboard (2, 3) where the objects (6) to be extracted are situated;
- spacing the paddles (12) from one another substantially, and making them slide on the translation guides (29) such as to take in the boxes (6) which are in the row (7);
- positioning the said paddles (12) at the level of the final box to be extracted (6a);
- drawing the paddles (12) together, such as to collect the required number of boxes;
- making the boxes slide onto the plate (11) during the movement of return to the position of withdrawal of the paddles (12) on the translation guides (29);
- positioning the plate (11) on the axis of the row (7) of the cupboard (2, 3) where the boxes are to be stored;
- pushing the boxes (6) back into their location when the paddles (12) are elongated by means of the fixed mechanical flap (14) which is in the middle of the paddles (12); and
- returning the paddles (12) to the withdrawn position.

13. Method for extraction and storage associated with the automatic distributor according to claim 9, for extraction from a first cupboard (2, 3), and storage in a second cupboard (3, 2), of boxes (6), comprising the steps consisting of:
- positioning the plate at the level of the row in the cupboard (2, 3) where the objects (6) to be extracted are situated;
- spacing the paddles (12) from one another substantially, and making them slide on the translation guides (29) such as to take in the boxes (6) which are in the row (7);
- positioning the plate (11) on the axis of the row (7) of the cupboard where the boxes (6) are to be stored;
- spacing the paddles (12) by at least the length of two flaps (14) combined, in order to make the said flaps pass from the front to the rear of the boxes (6);
- drawing the paddles (12) together so that the flaps can play their part as thrusters;
- making the paddles slide according to the axis Z, towards the required row, such as to store the boxes; and
- returning the paddles (12) to the withdrawn position.

## Patentansprüche

1. System zum Entnehmen und zum Einordnen, das zur Steuerung durch eine elektronische Steuerungseinrichtung bestimmt ist, die zur Steuerung des Verfahrens dieses Systems zum Entnehmen und Einordnen (4) im Zusammenwirken mit einer Verfahreinrichtung (4a, 4b), abhängig vom Wunsch eines Benutzers, dient, wobei dieses System zum Entnehmen und zum Einordnen (4) eine Platte (11) mit Führungen (29) und Leisten (12) aufweist, die geeignet sind, mit den Führungen derart zusammenzuwirken, daß die Leisten relativ zu den Führungen zwischen einer eingezogenen Position, in der sich die Leisten auf der Platte befinden, und einer ausgefahrenen Position, in der ein Abschnitt der Leisten über einen der Ränder der Platte vorsteht, verfahren können, wobei die Führungen (29) zwischen sich einen variablen Abstand haben, der geeignet ist, das Auseinanderfahren oder das Zusammenfahren der Leisten zur Folge zu haben, wobei die elektronische Steuerungseinrichtung dazu geeignet ist, das Verfahren der Leisten relativ zu der Platte zu steuern, **dadurch gekennzeichnet, daß** jede dieser Leisten in ihrer Mitte einen festen Flügel (14) aufweist, der so angestellt ist, daß er relativ zur Längsrichtung der Leiste einen Winkel nahe 90° ausbildet.

2. System zum Entnehmen und Einordnen nach Anspruch 1, **dadurch gekennzeichnet, daß** jede der Leisten an mindestens jedem ihrer Enden auf ihrem Rand, welcher der anderen Leiste zugewandt ist, einen Belag, insbesondere aus Kautschuk, aufweist, um die Haftung zwischen den zu entnehmenden Verpackungen und den Leisten zu fördern.

3. System zum Entnehmen und Einordnen nach Anspruch 1, **dadurch gekennzeichnet, daß** die Führungen (29) auf der Platte (11) in im wesentlichen zueinander paralleler Weise angebracht sind, wobei eine Steuerungseinrichtung (35) unter der Platte (11) angebracht ist, um den Abstand zwischen den Führungen zu steuern.

4. System zum Entnehmen und zum Einordnen nach Anspruch 3, **dadurch gekennzeichnet, daß** die Steuerungseinrichtung folgendes umfaßt:
- eine Gewindestange (27), die von einem Betätigungselement (19) in Drehung versetzt wird und auf der sich eine Mutter (22) verschiebt;
- zwei Arme (15), die zueinander und zur Achse (Z) der Führungen (29) parallel sind und benachbart ihren Enden Kontaktstücke (21) tragen, die mit den Führungen (29) verbunden sind und durch die Platte (11) durch längliche Öffnungen (24) senkrecht zur Achse (Z) der Führungen hindurchlaufen;
- zwei Koppelglieder (17), deren jedes an einem Ende an einem Arm (15) benachbart dessen Mittelpunkt, und am anderen Ende an der Mutter (22) derart angelenkt ist, daß das Verdrehen der Gewindestange (27) die Längsverschiebung der Mutter (22) auf der Stange (27) und durch Zwischenschaltung der Koppelglieder (17) das relative Auseinanderfahren oder Zusammenfahren der Arme (15) sowie, durch Zwischenschaltung der Kontaktstücke (21), das der Führungen (29) bewirkt.

5. System zum Entnehmen und Einordnen nach Anspruch 3, **dadurch gekennzeichnet, daß** die Steuerungseinrichtung folgendes umfaßt:
- ein Ritzel (233), das von einem Betätigungsgerät (219) um eine feste Achse (234) in Drehung versetzt wird;
- zwei Arme (215), die zueinander und zur Achse (Z) der Führungen (29) parallel sind und benachbart ihren Ende Kontaktstücke (221) tragen, die an die Führungen (29) angeschlossen sind und durch die Platte (11) durch längliche Öffnungen (224) rechtwinklig zur Achse (Z) der Führungen hindurchlaufen;
- zwei senkrecht zur Achse (Z) der Führungen angebrachte Zahnstangen, die beide in Verbindung mit dem Ritzel (233) stehen, wobei jede Zahnstange (231) an einem ihrer Enden mit einem der Arme (215) derart fest verbunden ist, daß die Drehung des Ritzels (233) das Verfahren der Arme (215) und durch Zwischenschaltung der Kontaktstücke (221) auch das der Führungen (29) auslöst.

6. System zum Entnehmen und zum Einordnen nach den Ansprüchen 3 bis 5, **dadurch gekennzeichnet, daß** die Steuerungseinrichtung auch zwei Linearführungen (18, 218) senkrecht zur Achse (Z) der Führungen umfaßt, in denen wenigstens zwei Gleitschuhe (30, 230) gleiten, die an den beiden Enden der Arme (15) angebracht sind.

7. System zum Entnehmen und zum Einordnen nach Anspruch 1, **dadurch gekennzeichnet, daß** die Leisten durch Riemen verfahren werden, wobei diese Riemen von motorisierten Antriebsrädern derart angetrieben werden, daß die Leisten über den einen oder den anderen der beiden einander gegenüberliegenden Ränder der Platte (11) überstehen können.

8. System zum Entnehmen und zum Einordnen nach Anspruch 1, **dadurch gekennzeichnet, daß** es mindestens eine fotoelektrische Zelle (140) umfaßt.

9. Automatische Ausgabevorrichtung mit zwei Regalen (2, 3), die einander zugewandt angeordnet sind und Gestelle (5) sowie ein System zum Entnehmen und zum Einordnen gemäß Anspruch 1 aufweisen, das zwischen den Regalen (2, 3) angeordnet ist, ferner mit einer elektronischen Steuerungseinrichtung, die es gestattet, das System zum Entnehmen und zum Einordnen zwischen den Regalen längs der Vertikalachse (Y) und der senkrecht zur Achse (Z) der Führungen liegenden Horizontalachse (X) der Regale zu verfahren, wobei die Leisten (12) des Systems zum Entnehmen und zum Einordnen (4) geeignet sind, über den einen oder den anderen der beiden einander gegenüberliegenden Ränder der Platte überzustehen und so im Hinblick auf die Gestelle angebracht sind, daß das System zum Entnehmen und zum Einordnen mit den beiden Regalen (2, 3) in gleicher Weise zusammenwirken kann, **dadurch gekennzeichnet, daß** jede der Leisten (12) eine Länge aufweist, die doppelt so groß wie die Tiefe jedes Gestells (2, 3) ist.

10. Automatische Ausgabevorrichtung nach Anspruch 9, **dadurch gekennzeichnet, daß** eines der beiden Regale (2, 3) ein Transportband (61) umfaßt, das in diesem Regal horizontal angeordnet ist, wobei das Regal eine Platte (62) zum Einordnen aufweist, die an einer Seitenwand des Regals vorsteht, und wobei die Platte (62) zum Einordnen mit einer Randleiste (64) versehen ist, die sich auf der Platte zum Einordnen parallel zur Richtung des Transportbandes bewegen kann.

11. Automatische Ausgabevorrichtung nach Anspruch 9, **dadurch gekennzeichnet, daß** eines der Regale (2, 3) einen Gestellboden (50) zum Einordnen aufweist, der in Richtung der Tiefenachse (Z) des Regals zwischen einer Ruhestellung, in welcher der Gestellboden zum Einordnen in das Regal eingefahren ist, und einer Stellung zum Einordnen, in welcher der Gestellboden zum Einordnen teilweise aus dem Regal ausgefahren ist, beweglich ist, wobei der Gestellboden zum Einordnen mehrere Zonen (51) umfaßt, deren jede durch die elektronische Steuerungseinrichtung identifizierbar ist.

12. Verfahren zum Entnehmen und Einordnen in Verbindung mit der automatischen Ausgabevorrichtung gemäß Anspruch 9, zur Entnahme von Verpackungen in einem ersten Regal (2, 3) und zum Einordnen derselben in diesem ersten Regal (2, 3), mit den folgenden Schritten:
- Positionieren der Platte auf der Höhe der Reihe des Regals (2, 3), auf der sich das oder die zu entnehmende(n) Objekt(e) befindet/befinden;
- merkliches Auseinanderfahren der Leisten (12) und Verschieben derselben auf den Verschiebführungen (29) derart, daß sie die Verpackungen, die sich in der Reihe (7) befinden, umfassen;
- Positionieren der Leisten (12) auf dem Niveau der letzten herauszunehmenden Verpackung;
- Zusammenfahren der Leisten (12) so, daß sie die gewünschte Verpackungsanzahl erfassen;
- während des Zurückfahrens der Leisten (12) auf den Verschiebeführungen (29) in die eingezogene Position läßt man die Verpackungen auf die Platte (11) abrutschen;
- Positionieren der Platte (11) in der Achse der Reihe (7) des Regals (2, 3), wo die Verpackungen eingeordnet werden müssen;
- Zurückstoßen der Verpackungen (6) an ihren Standort durch den festen mechanischen Flügel (14), der sich in der Mitte der Leisten (12) befindet, während des Ausfahrens der Leisten (12),
- und Zurückfahren der Leisten (12) in deren eingezogene Stellung.

13. Verfahren zum Entnehmen und zum Einordnen in Verbindung mit der automatischen Ausgabevorrichtung gemäß Anspruch 9 zum Entnehmen von Verpackungen (6) in einem ersten Gestell (2, 3) und zum Einordnen derselben in ein zweites Gestell (3, 2), wobei das Verfahren die folgenden Schritte umfaßt:
- Positionieren der Platte auf der Höhe der Reihe des Regals (2, 3), auf der sich das oder die zu entnehmende(n) Objekt(e) befindet/befinden;
- deutliches Auseinanderfahren der Leisten (12) und Verfahren derselben auf den Verschiebeführungen (29) so, daß die sich in der Reihe befindlichen Verpackungen eingeschlossen werden;
- Positionieren der Platte (11) in der Achse der Reihe des Regals, in das die Verpackungen eingeordnet werden müssen;
- Auseinaderfahren der Leiten (12) um wenigstens die Länge der beiden zusammengenommenen Flügel (14), um die Flügel von vorne aus hinter die Verpackungen (6) zu verbringen;
- Zusammenfahren der Leisten, damit die Flügel ihre Rolle als Stoßvorrichtung erfüllen können;
- Verfahren der Leisten längs der Achse (Z) zu der gewünschten Reihe, um die Verpackungen einzuordnen,
- und Zurückfahren der Leisten (12) in deren eingezogene Stellung.
